# EUROPÄISCHE PATENTSCHRIFT

(11) **EP 3 369 593 B1**
(45) Veröffentlichungstag und Bekanntmachung des Hinweises auf die Patenterteilung: **19.08.2020**
(21) Anmeldenummer: 18150817.7
(22) Anmeldetag: 09.01.2018
(51) Int. Cl.: B60G 21/055, B29C 44/18, B29C 44/34

(54) **STABILISATOR FÜR KRAFTFAHRZEUGE**
STABILIZER FOR MOTOR VEHICLES
STABILISATEUR POUR VÉHICULES AUTOMOBILES

(30) Priorität: 10.01.2017 DE 102017100350
(43) Veröffentlichungstag der Anmeldung: 05.09.2018
(73) Patentinhaber: Heinrich Eibach GmbH, 57413 Finnentrop (DE)
(72) Erfinder: Hesse, Michael, 57439 Attendorn (DE); Jostes, Steffen, 57462 Olpe (DE)
(74) Vertreter: Köchling, Conrad-Joachim

(56) Entgegenhaltungen:
- DE-A1-102005 019 469
- DE-A1-102011 055 980
- JP-A- 2007 320 408
- KR-A- 20120 037 586
- US-A- 4 836 516
- US-A- 5 040 803
- US-A1- 2005 011 592
- US-A1- 2005 249 916
- US-A1- 2006 200 990
- US-A1- 2009 001 758
- US-A1- 2009 223 739

## Beschreibung

Die Erfindung betrifft eine Verwendung eines Stoffes zur Abdichtung des abgeplätteten Endes eines Stabilisators für Kraftfahrzeuge, zumindest aufweisend einen Hohlprofilabschnitt aus Metall mit mindestens einem gegenüber dem Hohlprofilabschnitt abgedichtetem und abgeplättetem Ende, wobei die Abdichtung innerhalb des Hohlprofilabschnitts in einem dem abgeplätteten Ende nahen oder unmittelbar angrenzenden Bereich erfolgt.

Heutzutage im Kraftfahrzeugbau verwendete Stabilisatoren bestehen in der Regel aus einem Hohlprofilabschnitt aus Metall und dienen dazu, bei Kurvenfahren und Straßenunebenheiten dem Einfedern eines Rades einer Seite und ein dadurch bedingtes Wanken eines Fahrzeugs entgegenzuwirken und dieses Wanken somit zu verringern.
Hierzu wird der Stabilisator mit den Radaufhängungen einer Achse mittelbar verbunden.
Unter anderem um eine hohe Lebensdauer derartiger Stabilisatoren zu erzielen, ist es üblich, die Innenmantelfläche des jeweiligen Hohlprofils mit einem Korrosionsschutzmittel, beispielsweise einem Korrosionsschutzöl zu benetzen. Hierdurch wird eine Korrosion des Hohlprofilabschnittes von innen heraus weitestgehend und langfristig vermieden.

Zudem ist es bekannt und üblich, zur Erhöhung der Lebensdauer eines derartigen Stabilisators den Hohlprofilabschnitt mitsamt dem geplätteten Ende und gegebenenfalls mitsamt der Lochung zu behandeln. Eine derartige Behandlung kann beispielsweise durch Oberflächenverfestigungsstrahlen und/oder durch einen Beschichtungsprozess, wie beispielsweise eine chemische Vorbehandlung der Metalloberfläche in jeglicher Art und Weise, eine Zinkphosphatierung, eine Eisenphosphatierung oder eine Beschichtung mittels Nanokeramik, erfolgen. Stabilisatoren werden dem Stand der Technik entsprechend zudem mit einem Pulverlack beschichtet. Bei Vorbehandlung kommen sowohl Sprühverfahren wie auch Tauchverfahren oder dergleichen an sich bekannte Verfahren zur Beschichtung zum Einsatz.

Zudem kann es insbesondere durch die großen Temperaturunterschiede in einer derartigen Beschichtungsanlage sowohl im Sprüh- als auch im Tauchverfahren und in zugehörigen Öfen zu entsprechendem Eintritt beziehungsweise Austritt von diversen Stoffen, wie beispielsweise Flüssigkeiten oder Umgebungsluft, die zu Fehlern und zu Ausschuss bei der Herstellung führen können, kommen. Diese Fehler können insbesondere durch eine vollständige Abdichtung des Hohlprofilabschnittes gegenüber dem geplätteten Ende vermieden werden.

Im Stand der Technik ist aus der DE 10 2005 019 469 A1 ein gattungsgemäßer Stabilisator und ein Verfahren zur Herstellung desselben bekannt, bei dem zur Abdichtung in dem abgeplätteten Ende ein Einleger mitverformt ist, der das Ende des Hohlprofilabschnitts abdichtet.

Die Abdichtung unmittelbar im Bereich des abgeplätteten Endes mit Lochung unterliegt im Einsatz des Stabilisators sowohl Temperaturschwankungen als auch Bewegungen, wodurch eine in diesem Bereich angeordnete Abdichtung gegebenenfalls Schaden nehmen kann und nach einer Beschädigung Umgebungsluft oder Flüssigkeiten aus der Umgebung in das Innere des Hohlprofilabschnitts eindringen können.

Des Weiteren kommt es durch das nachträgliche Lochen des Stabilisators im Plättungsbereich, durch den Stanzeinzug, zur erneuten Aufweitung und Undichtigkeit des Endenbereichs, also im Bereich der Plättungsöffnung und der Lochung.

Eine derartige Abdichtung hat sich somit in der Praxis häufig als nicht anwendbar erwiesen.

Ein Stabilisator der eingangs genannten Art ist aus der US 2005/0011592 A1 bekannt. Jedes Ende dieses Stabilisators weist ein, auf seiner Innendurchmesser aufgetragenes Haftmittel auf, um eine Dichtung zu bilden. Dabei sind die Enden jeweils abgeflacht und miteinander verbunden. Das Haftmittel kann gemäß der Lehre der US 2005/0011592 A1 ein pulverförmiges Metall umfassen, welches pulverförmiges Nickel oder Bor umfasst. Dieses kann sich mit den Enden des rohrförmigen Elementes verbinden, wobei das Bor das verbindende Enden des rohrförmigen Elementes erleichtert. Alternativ und/ oder ergänzend kann das Haftmittel auch ein Epoxid sein. Wiederum alternativ kann auch das Haftmittel aus Nickel bestehen.

Bei der Verwendung derartiger Haftmittel kann zwar zunächst eine Abdichtung erfolgen. Durch anschließend erfolgende weitere Bearbeitungsvorgänge sowohl des abgeplätteten Endes als auch des Außenmantels des Hohlprofilabschnittes, die beispielsweise durch eine Wärmebehandlung beim Pulverbeschichten oder beim Behandeln mittels eines Sprüh- oder Tauchverfahrens erfolgen, werden derartige Haftmittel Temperaturen von 180°C bis 200°C ausgesetzt und nehmen dabei in der Regel Schaden, so dass die Abdichtung darunter leidet, beziehungsweise nicht mehr gegeben ist.

Auch ist die Verwendung derartiger Haftmittel häufig nicht möglich, wenn auf die Innenmantelfläche des Hohlprofils des Stabilisators ein Korrosionsschutzmittel, beispielsweise ein Korrosionsschutzöl, aufgetragen ist. Derartige Haftmittel können auf diesem Korrosionsschutzmittel oder Korrosionsschutzöl häufig nicht haften und somit Verwendung finden, um eine wirksame Abdichtung des Endbereiches des Hohlprofils des Stabilisators zu ermöglichen.

Aus der US 2009/0001758 A1 ist ein ausdehnbarer Einsatz für eine Hohlraumstruktur bekannt.

Aus der US 2005/0249916 A1 ist ein mit Schaum gefüllter Stab oder Biegestab bekannt.

Zudem ist aus der US 5, 040, 803 eine Methode zur Hohlraumversiegelung und eine Hohlraumversiegelung bekannt.

Ferner ist aus der US 2009/0223739 A1 eine Schallwand zur Abdichtung oder Dämpfung eines Hohlraumkörpers durch ein mittels Hitze expandierendes Material bekannt.

Aus der JP 2007/320408 A ist ein Hohlstabilisator bekannt, bei dem ein massives Element in das hohle Innere der beiden Endabschnitte eines Rohmaterials eingeführt und anschließend die Enden mitsamt des eingeführten Elementes mittels eines Warmverformungsprozesses verquetscht werden, um einen flachen Anbringungsabschnitt zu bilden. Dabei wird das massive Element mit verquetscht und dient der Abdichtung und der Festigkeit dieses Bereiches.

Aus der KR 2012 0037586 A ist ein Stabilisator bekannt, der mittels einer Walzvorrichtung flache Enden aufweist, bei dem ein Hohlmaterial-Endteil eingeführt wurde, welches unter Verwendung der Reibungshitze während eines Walzvorganges zur Abflachung der Enden erhitzt wird und dieses abdichtet.

Aus der DE 10 2005 019 469 A1 ist ein Stabilisator für Kraftfahrzeuge bekannt, bei dem in seinem abgeplätteten Ende ein Einleger mitverformt ist, der das Ende des Hohlprofilabschnittes abdichtet.

Aufgrund des eingangs genannten Standes der Technik liegt der vorliegenden Erfindung die Aufgabe zugrunde, einen Stabilisator der eingangs genannten Art zu schaffen, bei dem der Endbereich durch die Verwendung eines Materials wirksam abgedichtet ist, bei dem durch die Abdichtung auch bei einer späteren Wärmebehandlung sichergestellt ist, dass keinerlei Flüssigkeit oder Umgebungsluft in den Hohlprofilabschnitt hinein gelangt oder aus diesem heraus gelangt, der dabei kostengünstig und einfach zu fertigen ist und eine hohe Lebensdauer aufweist.

Zur Lösung dieser Aufgabe schlägt die Erfindung Anspruch 1 vor.

Die Verwendung eines intumeszenten Materials zur Abdichtung des unmittelbar an das abgeplättete Ende angrenzenden Bereiches des Hohlprofilabschnittes stellt eine einfach zu realisierende, langlebige und äußerst effiziente Art der Abdichtung dieses Bereiches dar, ohne einen signifikanten Gewichtszuwachs in Kauf nehmen zu müssen. Dabei kann ein derartiges intumeszentes Material auch Verwendung finden, wenn der Innenmantel des Hohlprofilabschnittes vorher mit einem Korrosionsschutzmittel wie beispielsweise einem Korrosionsschutzöl behandelt wurde, da das intumeszente Material gegebenenfalls sogar mit dem verwendeten Korrosionsschutzöl eine Bindung eingeht und trotz Ölfilm auf dem Innenmantel des Hohlprofilabschnittes wirksam gegenüber diesem abdichtet und ein Eindringen von Umgebungsluft oder Flüssigkeiten in das Innere des Hohlprofilabschnittes wirksam verhindert.

Zudem ist durch die Aufblähung des intumeszenten Materials nach seiner Aktivierung durch Erwärmung eine vollständige Ausfüllung des unmittelbar oder nahezu unmittelbar an das abgeplättete Ende angrenzenden Bereiches sichergestellt. Das intumeszente Material dehnt sich nach seiner Aktivierung mittels Erwärmung überall dorthin aus, wo es Platz findet. Insofern kann eine Ausdehnung bis unmittelbar an das abgeplättete Ende heran und den gesamten Querschnitt des Hohlprofilabschnittes ausfüllend erfolgen. Ist während des Aufblähens der Platz in Richtung des abgeplätteten Endes durch dieses begrenzt, so wird sich eine weitere Ausdehnung in Richtung des dem abgeplätteten Ende entgegengesetzten Bereiches des Hohlprofilabschnittes fortsetzen.

Die Verwendung eines derartigen intumeszenten Materials zur Abdichtung ermöglicht auch diverse spätere weitere Bearbeitungsvorgänge sowohl des abgeplätteten Endes als auch des Außenmantels des Hohlprofilabschnitts. Dies bedeutet, dass beispielsweise auch eine spätere Wärmebehandlung die beispielsweise beim Pulverbeschichten oder beim Behandeln mittels eines Sprüh- oder Tauchverfahrens erfolgt, wobei häufig Temperaturen von 180-200° für einen Zeitraum von mindestens einer Stunde auf den Hohlprofilabschnitt einwirken, durchgeführt werden kann, ohne dass die Abdichtung darunter leidet. Zudem ist es insbesondere während dieser Nachbehandlungen sichergestellt, dass keinerlei Austritt beispielsweise von erwärmtem Korrosionsschutzmittel aus dem Inneren des Hohlprofilabschnitts heraus erfolgt, welches zu Fehlern und somit zu Ausschuss bei einer Nachbehandlung, wie beispielsweise einer Pulverbeschichtung, führt.

Insbesondere kann besonders bevorzugt vorgesehen sein, dass das intumeszente Material aus einem Ethylen-Copolymer- basierenden expandierenden Kunststoff besteht.

Ein derartiger Ethylen-Copolymer- basierender expandierender Kunststoff hat sich besonders als intumeszentes Material geeignet und kann beispielsweise bei Aktivierung mittels Erwärmung sein Volumen auf ein Vielfaches, beispielsweise gegenüber seinem Ursprungsvolumen vergrößern. Somit ist insbesondere durch eine Verwendung dieses Werkstoffes eine äußerst effektive, langlebige und wärmeunempfindliche Abdichtung dieses Bereiches ermöglicht.

Des Weiteren ist durch das intumeszente Material eine adhäsive Verbindung mit der Oberfläche des Hohlprofils ermöglicht.

Weiter kann besonders bevorzugt vorgesehen sein, dass das intumeszente Material aus einem etwa V-förmigen oder ringartigen oder streifenartigen Materialstück besteht, welches unter Druck in das Ende des Hohlprofilabschnitts in diesen einführbar oder eingeführt ist und dort lagesicher bis zum Aktivieren an dem Innenmantel des Hohlprofilabschnitts angeordnet ist.

Ein derartiges Materialstück, welches eine etwa V-förmige oder ringartige oder streifenartige Form aufweist, kann auf einfache Art und Weise entweder händisch oder mittels eines Hilfswerkzeuges oder in einem teil- oder vollautomatischen Prozess in das Rohrinnere hineingeführt werden und verbleibt dort durch die materialeigene Entspannung bzw. durch ein Übermaß. Das bedeutet, dass beispielsweise ein zu etwa einer V- Form gebogener Materialstreifen sich mit seinen freien Enden an dem Innenmantel durch die Eigenentspannung abstützt und dort an dieser Stelle verbleibt, selbst wenn der Hohlprofilabschnitt im Zuge der Weiterverarbeitung seine Lage ändert.

Im Falle der Materialstücke mit Übermaß bedeutet das, dass die Teile durch Reibung an der bestimmten Position verbleiben.

Ein derartiges Materialstück verbleibt in seiner ursprünglichen Form bis zur Aktivierung mittels Erwärmen, und dichtet nach der Aktivierung mittels Erwärmen den Bereich in dem sich das Materialstück auf ein Vielfaches seines ursprünglichen Volumens aufbläht wirksam gegenüber der Umgebung ab.

Das eingeführte Materialstück kann aber auch derart ausgeführt sein, dass das Benetzen der Innenoberfläche mit Korrosionsschutzmittel auch noch nach dem Einführen des Stücks mittels einer einzufahrenden Lanze durchgeführt werden kann.

Alternativ kann besonders bevorzugt vorgesehen sein, dass das intumeszente Material eine körnige, granulatartige Form aufweist.

Ein derartiges intumeszentes Material mit einer körnigen, granulatartigen Form kann insbesondere bei Stabilisatoren verwendet werden, die nur ein abgeplättetes Ende aufweisen. Bei derartigen Stabilisatoren ist das dem abgeplätteten Ende entgegengesetzte Ende des Stabilisators verschlossen und weist in diesem Bereich beispielsweise einen Angriff auf, mittels dessen Torsionskräfte auf den Stabilisator übertragen werden können. Bei der Verwendung eines derartigen Stabilisators kann das intumeszente Material zuerst eingeführt werden und mittels Verschwenken in eine mit dem abgedichteten Ende zum Erdboden gerichtete Lage dort verbleiben. Hierbei fällt durch eine entsprechende Bewegung bzw. durch die Erdbeschleunigung das intumeszente Material in Richtung dieses Endes. Anschließend wird das entgegengesetzte Ende abgeplättet und gegebenenfalls mit einer Lochung versehen und nun der Stabilisator in eine Lage versetzt, in der das abgeplättete Ende dem Erdboden zugewandt ist. Durch die Erdschwere verrutscht nun das intumeszente Material in körniger oder granulatartiger Form in einen an das abgeplättete Ende angrenzenden Bereich. Nach Aktivierung in diesem Bereich, also durch Erwärmen auf eine Temperatur, die die Aufblähung des intumeszenten Materials bewirkt, wird auch dieser Bereich wirksam durch das sich in diesem Bereich aufblähende intumeszente Material abgedichtet und ein Eindringen von Umgebungsluft oder Flüssigkeiten oder ein Austreten von beispielsweise Korrosionsschutzmittel aus dem Inneren des Hohlprofilabschnittes durch das abgeplättete Ende heraus wirksam vermieden.

Wiederum alternativ kann besonders bevorzugt vorgesehen sein, dass das intumeszente Material eine pastöse Form aufweist.

Durch die Eigenhaftung eines in pastöser Form vorliegenden intumeszenten Materials kann dieses auf einfache und schnelle Art und Weise an nahezu beliebiger Stelle innerhalb des Hohlprofilabschnittes beispielsweise durch Einbringen mittels einer Lanze mit entsprechender Düse aufgebracht werden und bis zur Aktivierung dort verbleiben.

Des Weiteren wird die eingangs gestellte Aufgabe der Erfindung durch ein Verfahren, welches in den Patentansprüchen 6 bis 9 dargestellt ist, gelöst.

Gemäß dieses Verfahrens wird ein entsprechender Hohlprofilabschnitt zuerst in seine endgültige Form gebogen und gegebenenfalls gehärtet. Anschließend wird das intumeszente Material in das eine Ende des Hohlprofilabschnitts eingebracht, welches an das zu plättende Ende angrenzt. Dabei ist der Abstand zu diesem zu plättenden Ende vorgegeben, um sicherzustellen, dass eine vollständige Abdichtung nach Erwärmung und Aktivierung des intumeszenten Materials erfolgt. Anschließend wird das Ende geplättet und gelocht und falls nicht schon durch diesen Bearbeitungsprozess entsprechende Wärme zur Aktivierung erfolgt, der Endbereich erwärmt, so dass das eingebrachte intumeszente Material aktiviert wird und sein Volumen auf ein Vielfaches des ursprünglichen Volumens aufbläht.

Gegebenenfalls kann vor Einbringen des intumeszenten Materials auf die Innenmantelfläche des Hohlprofilabschnitts ein Korrosionsschutzmittel aufgebracht werden, um dessen Lebensdauer zu erhöhen.

Wiederum gegebenenfalls kann anschließend nach dem Plätten und Lochen des geplätteten Endes die Außenoberfläche des Hohlprofilabschnittes behandelt werden, beispielsweise durch Oberflächenverfestigungsstrahlen oder Beschichten. Eine Beschichtung erfolgt in der Regel durch eine Pulverbeschichtung der gesamten Außenoberfläche.

Ein Ausführungsbeispiel der Erfindung ist in den Figuren dargestellt und im Folgenden näher beschrieben.

Es zeigt:
- Figur 1: einen erfindungsgemäßen Stabilisator mit zwei abgeplätteten Endbereichen in Seitenansicht;
- Figur 2: ein Ende des Stabilisators mit ringförmigem intumeszenten Material vor der Abplättung und Aktivierung;
- Figur 3: desgleichen mit streifenförmigem intumeszenten Materialstück;
- Figur 4: desgleichen mit granulatartigem intumeszenten Material;
- Figur 5: desgleichen mit zu einer V-Form gebogenem streifenartigen Materialstück;
- Figur 6: ein abgeplättetes und gelochtes Ende eines Stabilisators mit aktiviertem intumeszenten Material.

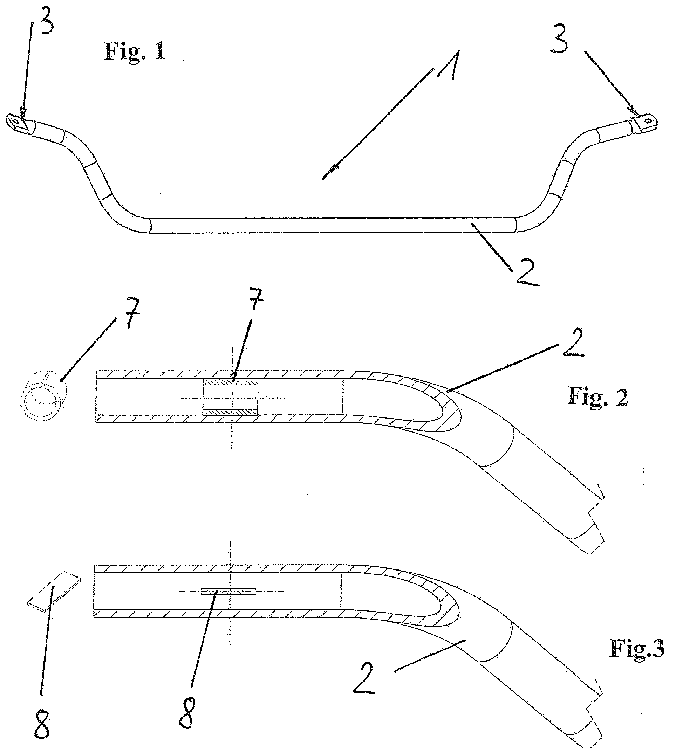

In den Figuren ist ein Stabilisator 1 zumindest teilweise gezeigt. Ein derartiger Stabilisator 1 ist geeignet zur Verwendung an Kraftfahrzeugen. Der Stabilisator 1 weist einen Hohlprofilabschnitt 2 aus Metall auf, wobei an dem Hohlprofilabschnitt 2 aus Metall gemäß Figur 1 beide Endbereiche abgeplättet und innen gegenüber dem abgeplätteten Ende 3 abgedichtet sind.

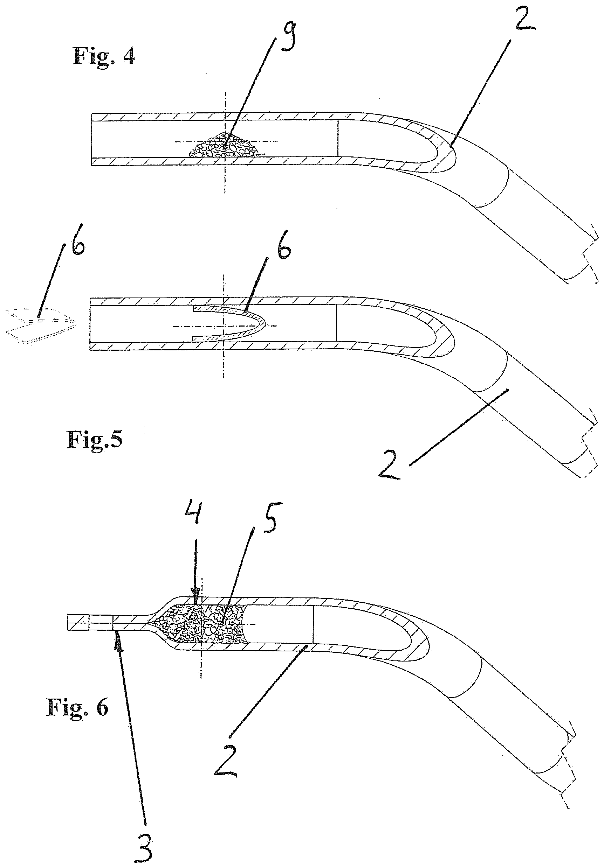

Erfindungsgemäß erfolgt, wie insbesondere aus Figur 6 ersichtlich, die Abdichtung gegenüber dem abgeplätteten Ende 3 innerhalb des Hohlprofilabschnittes 2 in einem dem abgeplätteten Ende 3 nahen oder, wie in Figur 6 gezeigt, in einem direkt an dem abgeplätteten Ende 3 angrenzenden Bereich 4. Zur Abdichtung ist in diesem Bereich 4 ein intumeszentes Material 5, wie insbesondere aus den Figuren 2 bis 5 ersichtlich, in den Hohlprofilabschnitt 2 eingebracht. Dieses intumeszente Material 5 bläht nach seiner Aktivierung mittels Erwärmen auf und dichtet diesen Bereich 4 des Hohlprofilabschnitts 2 vollständig gegenüber dem abgeplätteten Ende 3 ab. Dies ist insbesondere aus Figur 6 ersichtlich. Bei dem in den Figuren 2 bis 5 gezeigten Beispielen ist das intumeszente Material 5 bereits in den Bereich 4 eingebracht, aber noch nicht mittels Erwärmen aktiviert.

In den Ausführungsbeispielen besteht das intumeszente Material 5 aus einem Ethylen-Copolymer- basierenden expandierenden Kunststoff. Dieser Kunststoff hat neben der vollständigen Abdichtung nach Aktivierung mittels Erwärmen den weiteren Vorteil, auch den Innenmantel des Hohlprofilabschnitts 2 aus Metall mit einem Korrosionsschutzmittel beschichten zu können, ohne dass in diesem Bereich nach Aktivierung des intumeszenten Materials 5 eine Undichtigkeit auftritt. Durch die Aktivierung mittels Erwärmen des intumeszenten Materials 5, wie insbesondere in Figur 6 gezeigt, wird der an das abgeplättete Ende 3 angrenzende Bereich vollständig abgedichtet, so dass keinerlei Umgebungsluft oder Flüssigkeiten sowohl aus dem Inneren des Hohlprofilabschnitts 2 durch das abgeplätteten Ende 3 heraus nach außen austreten kann beziehungsweise in das Innere des Hohlprofilabschnittes 2 gelangen kann. Hierdurch ist insbesondere eine Nachbearbeitung beispielsweise mittels Sprüh- oder Tauchverfahren innerhalb eines Ofens, bei dem üblicherweise Temperaturen von 180 bis 200° auch für einen Zeitraum von mindestens einer Stunde vorherrschen, ermöglicht, ohne dass es zu entsprechendem Eintritt beziehungsweise Austritt, welcher zu Fehlern und Ausschuss führen würde, kommt.

Wie insbesondere aus Figur 2 ersichtlich kann das intumeszente Material 5 aus einem zu einem Ring 7 geformten Materialstück bestehen, welcher unter leichtem Druck bis zur gewünschten Stelle in den Hohlprofilabschnitt 2 eingeführt wird und durch die materialeigene Entspannung des Rings 7 dort an der Innenmantelfläche anliegend verbleibt.

Alternativ kann, wie in Figur 3 dargestellt, auch das intumeszente Material 5 aus einem streifenförmigen Materialstück 8 bestehen, welches unter leichtem Druck in den Hohlprofilabschnitt 2 eingeführt wird und dort verbleibt. Wiederum alternativ und in Figur 5 dargestellt kann das intumeszente Material 5 auch aus einem zu einer etwa V- Form 6 gebogenen streifenartigen Materialstück bestehen. Auch dieses wird unter leichtem Druck in das Ende des Hohlprofilabschnitts 2 eingeführt und verbleibt dort lagesicher bis zum Aktivieren mittels Erwärmen. Insbesondere zur Verwendung von nur einseitig abzuplättenden Stabilisatoren kann, wie in Figur 4 dargestellt, das intumeszente Material 5 auch eine körnige, granulatartige Form 9 aufweisen.

Zudem kann, wie aus den Figuren nicht ersichtlich, das intumeszente Material 5 auch in pastöser Form in das Hohlprofilabschnittsinnere 2 eingeführt werden.

Die dargestellten Materialstücke 6,7,8 können auch bei von einem kreisrunden abweichenden Querschnitt des Hohlprofilabschnittes Verwendung finden, so dass auch Hohlprofilabschnitte nahezu beliebigen Querschnittes mittels des intumeszenten Materials 5 wirksam abgedichtet werden können.

Ein in der Figur 1 in Gesamtheit dargestellter, beidends abgeplätteter Stabilisator 1 kann beispielsweise in folgenden Schritten hergestellt werden. Zuerst erfolgt ein Biegen und Härten des Hohlprofilabschnitts 2 in seine endgültige Form. Anschließend wird das intumeszente Material 5 in die noch nicht abgeplätteten Enden des Hohlprofilabschnitts 2 eingebracht und dort mit vorgegebenem Abstand zu diesen Enden lagesicher positioniert. Anschließend wird jedes Ende erwärmt und umgeformt und gelocht und gegebenenfalls falls nicht bei der Endenbearbeitung ausreichend Wärme zur Aktivierung des intumeszenten Materials und somit zum Aufblähen des Materials 5 angefallen ist, auf mindestens die Aktivierungstemperatur des intumeszenten Materials 5 erwärmt, so dass das intumeszente Material 5 aufbläht und diesen Bereich wirksam abdichtet.

Gegebenenfalls wird vor Einbringen des intumeszenten Materials 5 auf die Innenmantelfläche des Hohlprofilabschnitts 2 zum Schutz des Stabilisators 1 ein Korrosionsschutzmittel aufgebracht. Wiederum gegebenenfalls wird anschließend nach der Endenbearbeitung und Lochen des geplätteten Endes 3 die Oberfläche außenseitig verfestigungsgestrahlt und beschichtet, wobei als Oberflächenschutz häufig eine Pulverbeschichtung inkl. einer entsprechenden Vorbehandlung auf die Außenoberfläche des Hohlprofilabschnitts 2 aufgebracht wird.

### Bezugszeichenliste:

- 1): Stabilisator
- 2): Hohlprofilabschnitt
- 3): abgeplättetes Ende
- 4): abgedichteter Bereich
- 5): intumeszentes Material
- 6): V-förmiges Materialstück
- 7): ringartiges Materialstück
- 8): streifenartiges Materialstück
- 9): körnige, granulatartige Form

## Patentansprüche

1. Verwendung eines intumeszenten Materials zur Abdichtung des abgeplätteten Endes eines Stabilisators für Kraftfahrzeuge, der aus einem Hohlprofilabschnitt (2) aus Metall besteht und das Ende (3) gegenüber dem Hohlprofilabschnitt (2) abgeplättet ist, wobei das intumeszente Material (5) in den Hohlprofilabschnitt (2) eingebracht ist, wobei die Abdichtung innerhalb des Hohlprofilabschnittes (2) in einem dem abgeplätteten Ende (3) nahen oder unmittelbar angrenzenden Bereich erfolgt,
wobei das Material (5) nach seiner Aktivierung mittels Erwärmen aufbläht und diesen Bereich des Hohlprofilabschnitts (2) vollständig gegenüber dem abgeplätteten Ende (3) abdichtet.

2. Verwendung nach Anspruch 1, wobei das intumeszente Material (5) aus einem Ethylen-Copolymerbasierenden expandierenden Kunststoff besteht.

3. Verwendung nach Anspruch 1 oder 2, wobei das intumeszente Material (5) aus einem etwa V-förmigen (6) oder ringartigen (7) oder streifenartigen (8) Materialstück besteht, welches unter Druck in das Ende des Hohlprofilabschnitts (2) in diesen einführbar oder eingeführt ist und dort lagesicher bis zum Aktivieren an dem Innenmantel des Hohlprofilabschnitts (2) angeordnet ist.

4. Verwendung nach Anspruch 1 oder 2, wobei das intumeszente Material eine körnige, granulatartige Form (9) aufweist.

5. Verwendung nach Anspruch 1 oder 2, wobei das intumeszente Material (5) eine pastöse Form aufweist.

## Claims

1. Use of an intumescent material for sealing the flattened end of a stabilizer for motor vehicles consisting of a hollow profile section (2) made of metal, and the end (3) being flattened relative to the hollow profile section (2), the intumescent material (5) being fitted in the hollow profile section (2),
wherein the sealing is achieved within the hollow profile section (2) in an area close or immediately adjacent to the flattened end (3),
wherein the material (5), after its activation, expands by means of heating and completely seals this area of the hollow profile section (2) relative to the flattened end (3).

2. The use according to claim 1, wherein the intumescent material (5) consists of an ethylene copolymer-based expanding plastic material.

3. The use according to claim 1 or 2, wherein the intumescent material (5) consists of an approximately V-shaped (6) or ring-like (7) or strip-like (8) piece of material, which can be introduced or is introduced under pressure into the end of the hollow profile section (2) and is arranged there in a securely positioned manner until activation at the inner shell of the hollow profile section (2).

4. The use according to claim 1 or 2, wherein the intumescent material has a grainy, granular-like shape (9).

5. The use according to claim 1 or 2, wherein the intumescent material (5) has a pasty shape.

## Revendications

1. Utilisation d'un matériau intumescent pour l'étanchéification de l'extrémité aplatie d'un stabilisateur pour véhicules automobiles consistant en une section de profilé creux (2) en métal, et l'extrémité (3) étant aplatie par rapport à la section de profilé creux (2), le matériau intumescent (5) étant introduit dans la section de profilé creux (2),
dans laquelle l'étanchéification est obtenue au-dedans de la section de profilé creux (2) dans une zone proche de ou immédiatement voisine à l'extrémité aplatie (3),
dans laquelle le matériau (5) est mis en expansion après son activation au moyen de chauffage et obture de manière étanche complète cette zone de la section de profilé creux (2) par rapport à l'extrémité aplatie (3).

2. Utilisation selon la revendication 1, dans laquelle le matériau intumescent (5) consiste en un matériau plastique expansible à base de copolymères éthyléniques.

3. Utilisation selon la revendication 1 ou 2, dans laquelle le matériau intumescent (5) consiste en une pièce de matériau environ en forme de V (6) ou de type anneau (7) ou de type bande (8), qui peut être introduite ou est introduite sous pression dans l'extrémité de la section de profilé creux (2) et est arrangée là-dedans en position sûre jusqu'à l'activation à l'enveloppe intérieure de la section de profilé creux (2).

4. Utilisation selon la revendication 1 ou 2, dans laquelle le matériau intumescent a une forme granuleuse ou de type granulat (9).

5. Utilisation selon la revendication 1 ou 2, dans laquelle le matériau intumescent (5) a une forme pâteuse.
